# EUROPEAN PATENT SPECIFICATION

(11) **EP 2 515 222 B1**
(45) Date of publication and mention of the grant of the patent: **03.02.2016**
(21) Application number: 12158875.0
(22) Date of filing: 09.03.2012
(51) Int. Cl.: G06F 3/048, G06F 3/147, G11B 27/34, G11B 20/10

(54) **Display control apparatus, method for controlling display, and program therefore**
Anzeigesteuerungsvorrichtung, Anzeigesteuerungsverfahren und Programm dafür
Appareil de contrôle d'affichage, procédé de contrôle d'affichage et programme associé

(30) Priority: 23.03.2011 JP 2011064636
(43) Date of publication of application: 24.10.2012
(73) Proprietor: Canon Kabushiki Kaisha, Tokyo 146-8501 (JP)
(72) Inventor: Migishima, Isao, Ohta-ku, Tokyo (JP); Hirose, Ayako, Ohta-ku, Tokyo (JP)
(74) Representative: Garner, Jonathan Charles Stapleton

(56) References cited:
- CN-A- 101 568 969
- US-A1- 2002 071 139
- US-A1- 2008 304 808
- US-A1- 2010 138 365

## Description

### BACKGROUND OF THE INVENTION

### Field of the Invention

The present invention relates to a display control apparatus for displaying a plurality of images on a display screen, a method for controlling image display, and a program therefor.

### Description of the Related Art

In recent years, storage media capable of storing images such as memory cards have been widely used. For example, when an image is captured by using a digital camera, the data of the captured image is stored as an image file in a storage medium. For the purpose of browsing, editing, and printing, images stored in a storage media in this way are displayed through display control on a display device of display control apparatuses such as digital cameras, personal computers (PCs), and printers.

With the remarkable increase in capacity of such a storage medium capable of storing images, a great number of images can be stored in a storage medium. Therefore, there has been a demand for a technique enabling a user to quickly retrieve a desired image. Japanese Patent Application Laid-Open No. 10-243331 discusses a technique for displaying a plurality of images on a display screen and changing the plurality of images displayed thereon in response to a user operation.

When displaying the plurality of images on the display screen in this way, the technique performs display processing to sequentially display the plurality of images to be displayed(hereinafter referred to as display-target images) instead of simultaneously displaying all of the display-target images.

Specifically, the technique reads a first image from a storage medium and performs display processing, and then repeats a similar sequence of read and display operations for a second and subsequent images.

However, when sequentially displaying the plurality of display-target images, it may take time to display all of the plurality of display-target images. In this case, the user needs to check whether a desired image is included in the display-target images displayed one after another. Therefore, before all of the display-target images have been displayed, the user cannot determine whether the desired image is included in the plurality of display-target images.

US 2010/0138365A1 discloses a wireless enabled digital media frame that can communicate over a wireless wide area network (WWAN). The wireless enabled digital media frame comprises an internal or external WWAN modem (e.g. GPRS/EDGE/UMTS/HSPA/LTE) such that the one or more media is transferred to the media frame using a wireless connection (e.g. 2G/3G/3.5G/4G). The wireless enabled digital media frame displays the received media files on a display screen. Further, broadcast alerts received over the WWAN and/or calculated current signal strength is also displayed on the display screen. Furthermore, setting information is received by the WWAN modem and accordingly applied to modify or update media frame functions.

US 2008/0304808A1 is concerned with a method and system for automatically creating an image product based on media assets stored in a database. A number of stored digital media files are analyzed to determine their semantic relationship to an event and are classified according to requirements and semantic rules for generating an image product. Rule sets are applied to assets for finding one or more assets that can be include in a story product. The assets, which best meet the requirements and rules of the image product are included.

US 2002/0071139A1 discloses a digital image frame and method for using the same. In one embodiment, the digital image frame is coupled with a computer system via a local area network (LAN). Data is sent between the digital image frame and computer system.

CN101568969A discloses a method and system for simplifying the creation process of a multimedia story for a user. It does this by using input and/or derived metadata, by providing constraints on the usability of assets, by automatically suggesting a theme for a story, and identifying appropriate assets and effects to be included in a story, which assets and effects are owned by the user or a third party.

### SUMMARY OF THE INVENTION

According to a first aspect of the present invention, there is provided a display control apparatus as specified in claims 1 to 7. According to a second aspect of the present invention, there is provided a display control method as specified in claim 8. According to a third aspect of the present invention, there is provided a computer readable storage medium that stores a program for causing a computer to execute the display control method as specified in claim 9.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principles of the invention.
Fig. 1 is a block diagram illustrating a configuration of a display control apparatus.
Fig. 2 is a table illustrating a file list of files stored in a file list storage unit.
Fig. 3 is a flowchart illustrating processing by the display control apparatus to display a plurality of images.
Fig. 4 is a table illustrating the contents of information stored in a display order storage unit.
Figs. 5A and 5B illustrate states where a display screen displays a plurality of images in an order specified in the file list.
Fig. 6A and 6B illustrate states where the display screen displays a plurality of images according to the processing illustrated in Fig. 3.
Figs. 7A and 7B illustrate states where the display screen displays a plurality of images according to the processing illustrated in Fig. 9.
Fig. 8 illustrates display areas in the display screen in which images are arranged.
Fig. 9 (9A + 9B) is a flowchart illustrating processing by the display control apparatus to display a plurality of images.
Figs. 10A and 10B are tables illustrating the contents of information stored in the display order storage unit.
Figs. 11A and 11B illustrate example display screens in which image attributes are displayed.

### DESCRIPTION OF THE EMBODIMENTS

Various exemplary embodiments, features, and aspects of the invention will be described in detail below with reference to the drawings.

However, unless otherwise specifically described, relative arrangement of elements and display screens described in the following exemplary embodiment are not limited thereto, and the scope of the present invention is not limited to the exemplary embodiment described below.

A display control apparatus according to an exemplary embodiment of the present invention displays nine images on one screen to enable a user to visually check and retrieve a desired image.

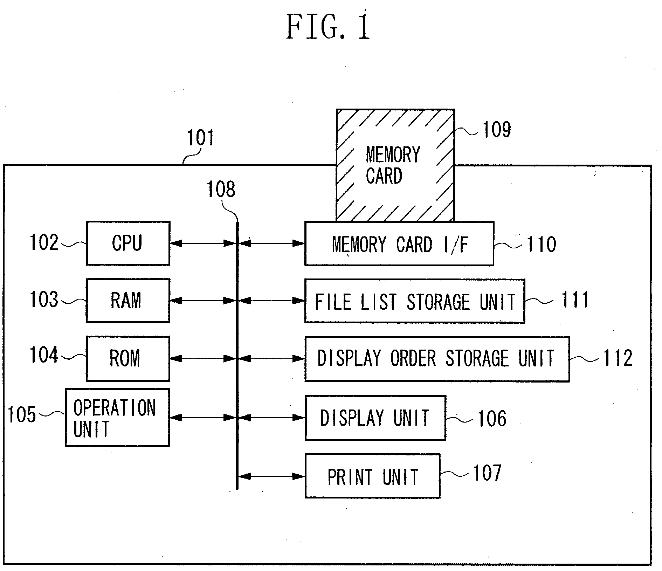

Fig. 1 is a block diagram illustrating a configuration of a display control apparatus 101. The display control apparatus 101 includes a central processing unit (CPU) 102, a random access memory (RAM) 103, and a read-only memory (ROM) 104. The CPU 102 controls the entire display control apparatus 101.

The RAM 103, for example a volatile semiconductor memory, provides various working buffer areas for storing program control variables and for temporarily storing data. The ROM 104, for example a nonvolatile semiconductor memory, stores control programs and operating system (OS) programs to be executed by the CPU 102.

The CPU 102 loads programs from the ROM 104 into the RAM 103, and executes the programs to control the display control apparatus 101 in various ways.

A control unit 105 includes various keys and receives user instructions. A display unit 106, a display device such as a liquid crystal display (LCD), displays various pieces of information according to instructions of the CPU 102.

A print unit 107 prints onto a print medium an image stored in a memory card 109 and an image received from an external device. A memory card interface 110 reads data stored in the memory card 109, writes data to the memory card 109, and deletes data stored in the memory card 109.

The display unit 106 can display a plurality of images stored in the memory card 109 and can sequentially display a plurality of display-target images.

The control unit 105 includes a key for changing a plurality of images to be displayed on the display unit 106. This key enables the user to enter an instruction even when display on the display unit 106 is not completed, i.e., some display-target images have not yet been displayed. Therefore, the user can change the display-target images even before all of the display-target images have been displayed.

The control unit 105 further includes a key for selecting an image to be processed (hereinafter referred to as a processing-target image) from a plurality of images displayed on the display unit 106 and processing the selected image. This key enables the user to enter an instruction also when some display-target images have not yet been displayed on the display unit 106.

More specifically, even before all of the display-target images have been displayed, if the desired image is displayed, the user can select the desired image as a processing-target image and apply predetermined processing to the image.

As the above-described predetermined processing, for example, the user may print the image selected by the user (hereinafter referred to as a user-selected image) through the print unit 107, or display the image in magnified form on the display unit 106. Further, the user may transmit the user-selected image by using an interface (not illustrated) to an external device outside the display control apparatus 101 or store the image in a memory other than the memory card 109.

After the user-selected image is displayed on the display unit 106, the user may change the display-target images one by one by using the control unit 105. Then, the user may select a desired image while changing the display-target images one by one in response to a user instruction, and print the selected image through the print unit 107 or transmit the image to an external device.

The user can use various methods to select a processing-target image. For example, the user may press a cross key included in the operation unit 105 to move the focus to a target display area in the display screen, and then press a determination key to select a desired image.

In this case, the user may use as a key for image selection the same key as the key for changing the display-target images. In this case, the CPU 102 may preferably determine whether the user instruction is an instruction for image selection or an instruction for display-target image changeover based on a time duration during which the key is pressed.

When the control unit 105 and the display unit 106 are formed as a touch panel, the user may touch the touch panel with a finger or a touch pen to select an image. In this case, the CPU 102 may determine a touched position on the touch panel to select an image displayed at the determined position as a processing-target image.

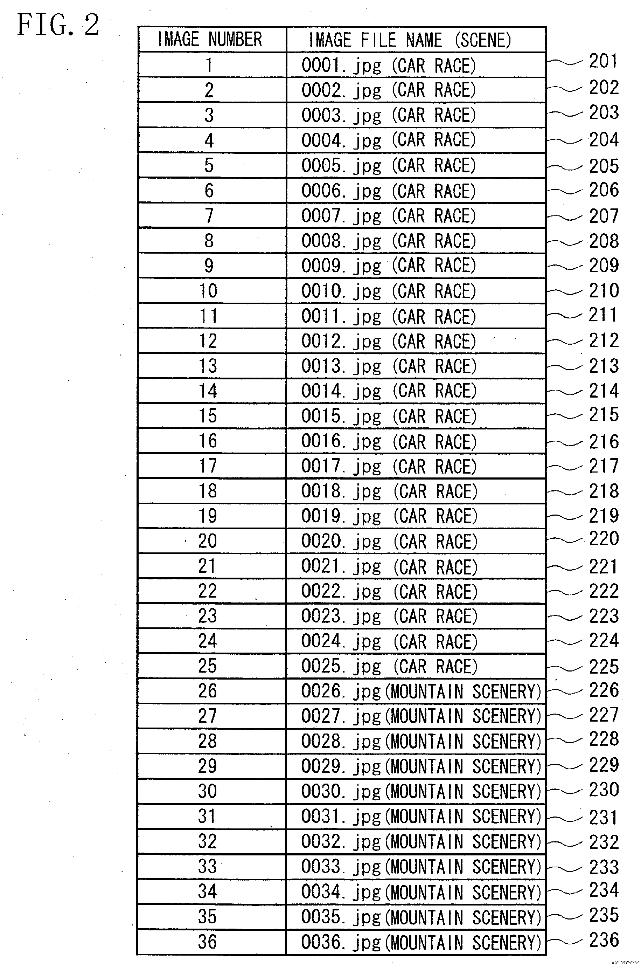

A file list storage unit 111 stores a file list of files included in the memory card 109. This file list includes file numbers of files included in the memory card 109, and file path information for each file. This file list is generated by the CPU 102 when the memory card 109 is attached to the memory card interface 110. This file list will be described in detail below with reference to Fig. 2.

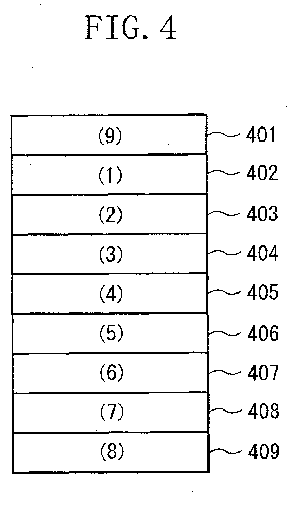

A display order storage unit 112 stores a display order list indicating the order of displaying on the display screen a plurality of images stored in the memory card 109. The CPU 102 refers to the display order list when displaying a plurality of images on the display screen of the display unit 106. The display order list will be described in detail below with reference to Fig. 4.

Although the file list storage unit 111 and the display order storage unit 112 are configured separately from the RAM 103 and the ROM 104, information to be stored in the file list storage unit 111 and the display order storage unit 112 may be stored in the RAM 103 and the ROM 104. These components described with reference to Fig. 1 are interconnected via a bus 108.

Fig. 2 illustrates the above-described file list of files stored in the file list storage unit 111. This file list includes image numbers of image files stored in the memory card 109, and file names as file path information. According to the file path information, the CPU 102 can access each image file stored in the memory card 109.

In the file list illustrated in Fig. 2, image files 201 to 236 are sorted in ascending order according to time information, i.e., the larger the image number, the later the time information. The time information includes the time of generation and the time of update of a relevant image file.

When an image file conforms to Exchangeable Image File Format (Exif), the date and time when the image was captured are described in a header of the image file. In this case, the date and time can be used as the time information for the image file.

Suppose that the image files 201 to 236 included in the file list illustrated in Fig. 2 include different imaging scenes. For example, the image files 201 to 226 correspond to a "car race" scene, and the image files 227 to 236 correspond to a "mountain scenery" scene.

When displaying a plurality of images on the display screen of the display unit 106, the CPU 102 refers to this file list and displays relevant images by corresponding the image numbers in the file list with the display areas on the display screen.

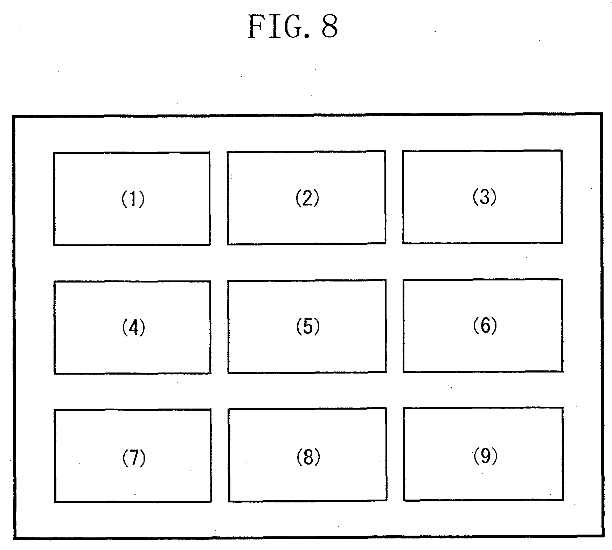

Fig. 8 illustrates the display screen of the display unit 106. The display screen includes display areas (1) to (9) for displaying images. In this case, nine display-target images having consecutive image numbers in the file list are sequentially displayed in the display areas (1) to (9).

An image having a smaller image number is displayed in a display area having a smaller display area number. For example, when the display-target images are assigned with image numbers 1 to 9, the images of image numbers 1 to 9 are displayed in the display areas (1) to (9), respectively.

However, in the present exemplary embodiment, the nine display-target images are displayed according to the display order list as illustrated in Fig. 4, not in ascending order of the image number.

Fig. 4 illustrates the display order list stored in the display order storage unit 112. The numbers in the display order list indicate the display order of respective display-target images.

Each of positions 401 to 409 of the display order list illustrated in Fig. 4 corresponds to any one of the display areas (1) to (9) in the display screen illustrated in Fig. 8. The CPU 102 displays images in order of the positions 401 to 409, i.e., from the top downward.

More specifically, according to the display order list illustrated in Fig. 4, the CPU 102 first displays the image having the largest image number in the display area (9). Then, the CPU 102 displays the image having the smallest image number in the display area (1). Subsequently, the CPU 102 displays images in order of the display areas (2) to (8).

In other words, for example, when the nine display-target images have image numbers 1 to 9, the CPU 102 displays first the image having the largest image number 9 out of the nine display-target images, not in ascending order of the image number. Then, the CPU 102 displays the image having the smallest image number 1. Subsequently, the CPU 102 sequentially displays the images of image numbers 2 to 8 in this order.

This enables the user to check the images of image number 1 and the image of image number 9 to determine the scenes of the nine display-target images because of the continuity of imaging scenes. For example, when the scene in the image of image number 1 coincides with the scene in the image of image number 9, the user can estimate that all of the nine display-target images include the same scene.

Accordingly, even if the images of image numbers 2 to 8 have not yet been displayed, the user can determine that all of the nine display-target images include the same scene as the images of image numbers 1 and 9.

Therefore, when the user is retrieving an image including a scene different from the scenes of the images of image numbers 1 and 9, the user can determine that the desired image is not included in the current nine display-target images.

As described above, the user can change the display-target images on the display unit 106 by using a key included in the control unit 105. Further, even before all of the display-target images have been displayed, the user can change the display-target images by using the above-described key.

Therefore, when the user determines that the desired image is not included in the current display-target images when looking at the images of image numbers 1 and 9, the user can change the display-target images even before the images of image numbers 2 to 8 are displayed. This enables the user to quickly retrieve the desired image.

Thus, displaying the display-target images according to the display order list illustrated in Fig. 4 enables the user to determine, upon looking at the two images displayed first, whether the desired image is included in the current display-target images even before all of the display-target images have been displayed. This is because of the continuity of photographing scenes. Thus, the user can determine whether the display-target images should be changed even before all of the display-target images have been displayed.

A state where the display screen displays images according to an image display method according to the present exemplary embodiment will be described in detail below. First of all, a method for displaying images in order of the image numbers specified in the file list (see Fig. 2) will be described below for comparison with the image display method according to the present exemplary embodiment.

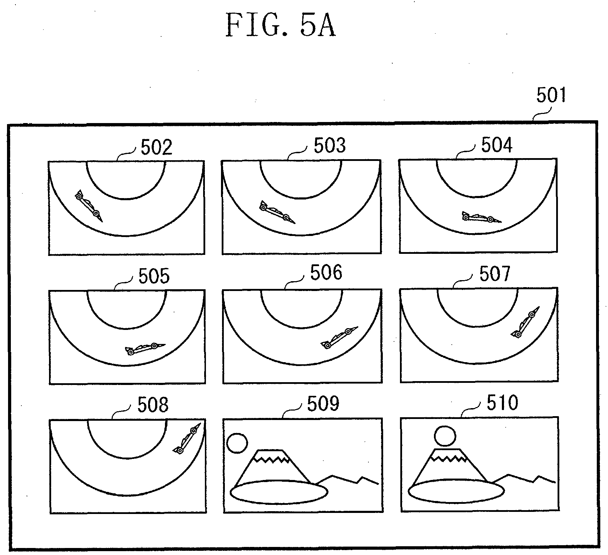

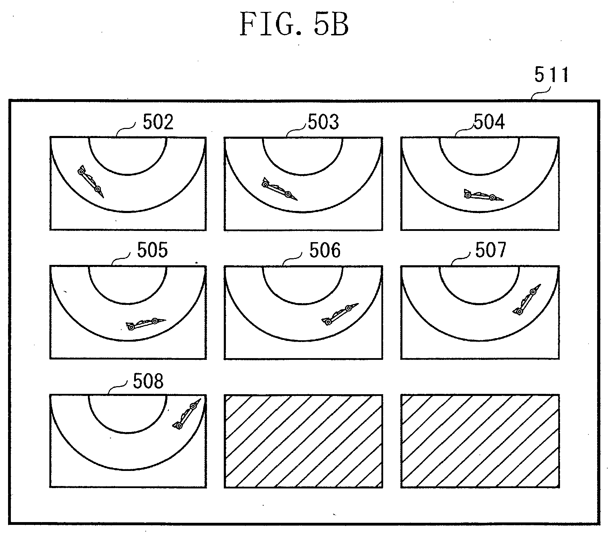

Figs. 5A and 5B illustrate states where the display screen displays a plurality of images in the order specified in the file list illustrated in Fig. 2. Referring to Figs. 5A and 5B, suppose that display-target images 502 to 510 correspond to the image files 219 to 227 in the file list illustrated in Fig. 2, respectively.

A display state 501 illustrated in Fig. 5A indicates that the display-target images 502 to 510 have been displayed in the display screen.

A display state 511 illustrated in Fig. 5B indicates an intermediate step of processing for displaying the nine display-target images as in the display state 501 illustrated in Fig. 5A. Referring to Fig. 5B, the display state 511 indicates that the display-target images 502 to 508 corresponding to a "car race" scene have been displayed while the display-target images 509 and 510 have not. In the display state 511, the user cannot determine whether images of a "mountain scenery" scene are included in the display-target images.

When the user is retrieving an image corresponding to a "mountain scenery" scene, the user cannot determine whether a "mountain scenery" scene is included in the nine display-target images on the display screen, and hence cannot determine whether the user should select the next display screen.

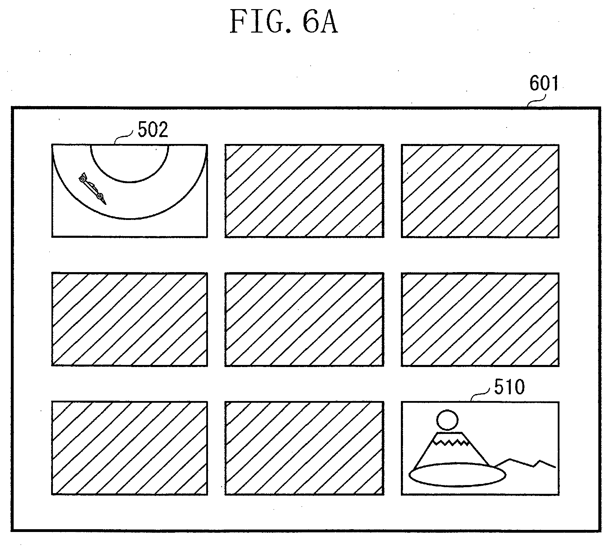

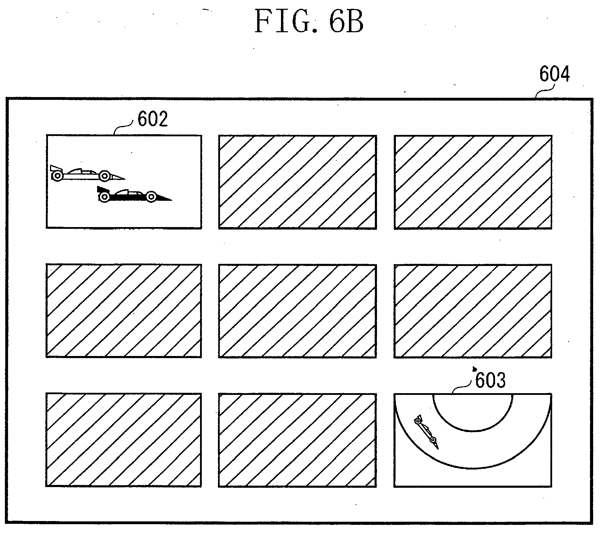

On the other hand, Figs. 6A and 6B illustrate states where the display screen displays a plurality of images according to the display order list illustrated in Fig. 4. Similar to the display state 501 illustrated in Fig. 5A, a display state 601 illustrated in Fig. 6A indicates an intermediate step of processing for displaying nine display-target images (the images 502 to 510).

When the display-target images are displayed according to the display order list illustrated in Fig. 4, the image 510 having the largest image number is displayed first, and the image 502 having the smallest image number is displayed secondly. In the display state 601, the images 510 and 502 out of the nine display-target images are displayed.

Referring to the display state 601, the image 510 displayed first corresponds to a "mountain scenery" scene. Therefore, upon looking at the image displayed first out of the display-target images, the user can grasp that an image of a "mountain scenery" scene is included in the nine display-target images.

Further, the image 502 displayed secondly corresponds to a "car race" scene. Therefore, upon looking at the display state 601, the user can grasp that the imaging scene has changed from a "car race" scene to a "mountain scenery" scene between the images 502 and 510.

Therefore, the user can predict that, in addition to the image 510, one or more images corresponding to a "mountain scenery" scene is included in the nine display-target images.

Therefore, when the user is retrieving an image corresponding to a "mountain scenery" scene, the user can determine that the user should wait until the nine display-target images are displayed.

In particular, if the desired image is the image captured first out of images of a "mountain scenery" scene, the user can determine that the desired image is included in the current nine display-target images.

As described above, the user can select a processing-target image even before all of the nine display-target images have been displayed. Therefore, when the desired image is displayed, the user can select a processing-target image and apply predetermined processing to the image.

As predetermined processing, after the user-selected processing-target images are displayed, the user may change the display-target images one by one. In this case, when the user determines that the desired image is included in the nine display-target images, even if the desired image is not displayed, the user can select any one of the nine display-target images to change the display-target images one by one, and continue retrieving the desired image.

When the user selects a processing-target image before all of the display-target images have been displayed, a user-selectable image is not limited to the images that have already been displayed. The user can also select an image that has not yet been displayed.

In other words, even if an image has not yet been displayed in the display area selected by the user, the user can select as a processing-target image the image to be displayed in the selected display area.

Another example display screen by the image display method according to the present exemplary embodiment will be described below. Suppose that the display-target images are the image files 210 to 218 of a "car race" scene.

The display state 604 illustrated in Fig. 6B indicates an intermediate step of displaying the nine display-target images of the image files 210 to 218 according to the display order list illustrated in Fig. 4, i.e., two out of the nine display-target images have been displayed.

In the display state 604, it is known that both the displayed images 602 and 603 are images of a "car race" scene. Then, upon looking at the display state 604, the user can presume that all of the nine display-target images correspond to a "car race" scene because of the continuity of photographing scenes.

When the user is retrieving an image corresponding to a "mountain scenery" scene, the user can determine, upon looking at the display state of 604, that the desired image is not included in the nine display-target images even if images other than the images 602 and 603 are not displayed. Therefore, the user can input an instruction for displaying the next display screen without waiting until images other than the images 602 and 603 are displayed.

Thus, when a plurality of images is sorted in order of date and time, images having a similar attribute often continue. Supposing a case where a plurality of images is sorted in order of time as described above, images including a similar scene continue.

In the present exemplary embodiment, therefore, two images having non-sequential image numbers are displayed on a priority basis. Thus, when two images displayed first are of similar scenes, the user can determine that images captured between the two images are also the same scene as the two images.

Therefore, when two out of the nine display-target images have been displayed, the user can determine whether the user should change the display screen to the next display screen even before all of the display-target images have been displayed. This enables the user to quickly retrieve the desired image.

Processing by the display control apparatus 101 to display a plurality of images as illustrated in Fig. 6 will be described below.

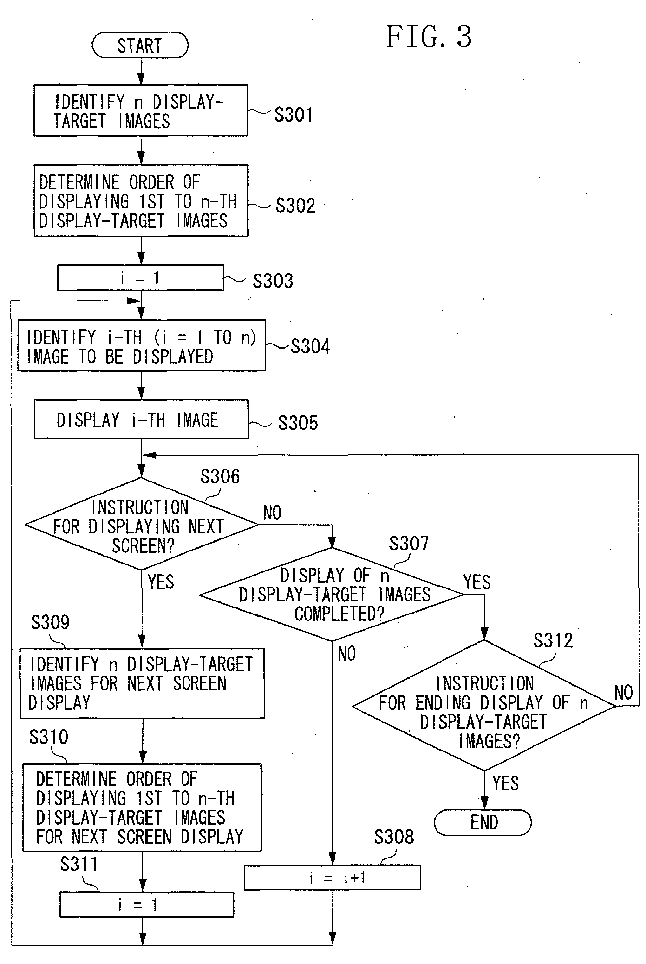

Fig. 3 is a flowchart illustrating processing by the display control apparatus 101 to display a plurality of images. A program for executing the processing illustrated in Fig. 3 is stored in the ROM 104. The processing illustrated in Fig. 3 is achieved when the CPU 102 loads the program from the ROM 104 and then executes it.

In step S301, the CPU 102 identifies n display-target images to be displayed on the display unit 106 out of images stored in the memory card 109.

In step S302, the CPU 102 determines the order of displaying the n display-target images identified in step S301, i.e., which images are to be displayed first to n-th. In step S302, referring to the display order storage unit 112, the CPU 102 determines the display order according to the display order list illustrated in Fig. 4.

As described above, the n display-target images identified in step S301 correspond respectively to n display areas in the display screen. The display order list illustrated in Fig. 4 indicates the order of displaying the display areas. Therefore, in step S302, the CPU 102 can determine the order of displaying the n display-target images by referring to the display order list illustrated in Fig. 4.

In the example illustrated in Fig. 8, the nine display-target images are displayed in the display areas of number (1) to (9) in ascending order of the image number, i.e., the image having the smallest image number first and the image having the largest image number last.

The display order list illustrated in Fig. 4 indicates the order of displaying the n display-target images in the above-described display areas (1) to (9). By referring to the display order list, the CPU 102 can determine the order of displaying the nine display-target images in the display areas (1) to (9).

The information about the display-target images determined in step S301, and the information about the order of displaying the relevant display-target images determined in step S302 are stored, for example, in the RAM 103. The above-described information is stored in such a manner that each of the display-target images is associated with the order of displaying each image.

In step S303, the CPU 102 initializes a natural number i (i = 1 to n) indicating the order of displaying images determined in step S302.

In step S304, based on the information indicating the order of displaying the display-target images stored in the RAM 103, the CPU 102 identifies the image to be displayed i-th in the display order determined in step S302 out of the n display-target images identified in step S301.

In step S305, the CPU 102 displays on the display screen of the display unit 106 the i-th display-target image identified in step S304. In this case, based on the file path information included in the file list, the CPU 102 identifies the image file to be displayed i-th out of the image files stored in the memory card 109.

Then, the CPU 102 loads the image data included in the identified image file from the memory card 109 to an image buffer in the RAM 103 via the memory card interface 110.

Then, the CPU 102 executes the program stored in the ROM 104 to rasterize the image data stored in the image buffer, and displays the rasterized image data on the display screen of the display unit 106. When an image file stored in the memory card 109 is an Exif format image file, the CPU 102 may display a thumbnail image stored in the header of the image file.

When displaying the i-th display-target image in step S305, the CPU 102 displays the relevant image in the display area corresponding to the relevant image out of a plurality of display areas set in the display screen of the display unit 106.

In step S306, the CPU 102 determines whether the user inputs an instruction for displaying the next display screen by operating the control unit 105. The next display screen refers to a screen for displaying another n display-target images having larger image numbers than image numbers of the current n display-target images in the file list illustrated in Fig. 2.

When the CPU 102 determines that the user does not input the instruction for displaying the next display screen (NO in step S306), the processing proceeds to step S307. In step S307, the CPU 102 determines whether the n display-target images have been displayed in the display screen. In this step, the CPU 102 determines that the n display-target images have not yet been displayed if the current setting of i is less than n, and that the n display-target images have been displayed when the current setting of i equals n.

When the CPU 102 determines that the n display-target images have not yet been displayed in the display screen (NO in step S307), the processing proceeds to step S308. In step S308, the CPU 102 increments i to set the (i+1)th image as a display-target image, and the processing returns to steps S304 and S305 to display the (i+1)th image.

With the processing in step S306, the CPU 102 can check the user instruction for displaying the next display screen each time one display-target image is displayed. When the user does not input the instruction for displaying the next display screen, the CPU 102 repeats displaying the relevant display-target image by the processing in steps S304, S305, S307, and S308.

Therefore, unless the user displays the next display screen, the CPU 102 displays first the image having the largest image number out of the nine display-target images, and then displays the remaining display-target images in ascending order of the image number, as illustrated in Figs. 6A and 6B.

On the other hand, when the CPU 102 determines that the user inputs the instruction for displaying the next display screen (YES in step S306), the processing proceeds to step S309. In step S309, the CPU 102 identifies n display-target images to be displayed in the next display screen. More specifically, in the file list illustrated in Fig. 2, the CPU 102 sets as new display-target images for the next display screen the images having image numbers obtained by adding "n" to the image numbers of the previous display-target images.

For example, suppose that the images of image numbers 10 to 18 in the file list illustrated in Fig. 2 are the current display-target images. When displaying the next display screen in this display state, the CPU 102 sets as new display-target images the images of image numbers having image numbers obtained by adding "n" (e.g., 9) to the image numbers 10 to 18, i.e., image numbers 19 to 27.

In step S310, the CPU 102 determines the order of displaying the images of the n display-target images identified in step S309. In step S310, similar to step S302 (see Fig. 3), the CPU 102 refers to the display order file stored in the display order storage unit 112 and acquires the information indicating the order of displaying the display areas. According to the order of displaying the display areas, the CPU 102 can determine the order of displaying the plurality of display-target images.

In step S311, the CPU 102 initializes the natural number i (i = 1 to n) indicating the order of displaying images, and the processing returns to the image display processing in steps S304 and S305.

Therefore, also when displaying the next display screen, the user can display first the image having the largest image number out of the nine display-target images, as illustrated in Figs. 6A and 6B.

Thus, through the processing in steps S306 and S309 to S311, in step S306, the user can input the instruction for displaying the next display screen even before all of the n display-target images have been displayed.

When the CPU 102 determines that n display-target images have been displayed in the display screen (YES in step S307), the processing proceeds to step S312. In step S312, the CPU 102 determines whether the user inputs an instruction for ending the processing for displaying the n display-target images.

When the CPU 102 determines that the user does not input an instruction for ending the processing for displaying the n display-target images (NO in step S312), the processing returns to step S306. In step S306, the CPU 102 determines again whether the user inputs the instruction for displaying the next display screen, and waits until the user inputs the instruction for displaying the next display screen.

On the other hand, when the CPU 102 determines that the user inputs an instruction for ending the processing for displaying n display-target images (YES in step S312), the processing of the flowchart is ended.

Thus, performing the processing for displaying a plurality of images on the display screen according to the flowchart illustrated in Fig. 3 enables displaying the images in the order specified in the display order list illustrated in Fig. 4, not in the order specified in the file list. As a result, the image having the largest image number is displayed first, and the image having the smallest image number is displayed secondly.

When the file list is generated based on the time information such as the image capturing time and file generation time, the latest image out of the display-target images is displayed first, and the oldest image is displayed secondly.

By checking these two images first, the user can determine the scenes of images between the two images in the order specified in the file list. In other words, the user can determine whether similar scenes continue or a scene change occurs in the plurality of display-target images.

Therefore, when there are three or more display-target images, the user can determine whether the desired image is included in the display-target images even before all of these images have been displayed.

Although, in the present exemplary embodiment, the image having the largest image number and the image having the smallest image number are displayed preferentially, the processing is not limited thereto as long as two images having non-sequential image numbers are displayed preferentially. This processing enables the user to determine the scenes of images between the two images displayed on a priority basis.

In the examples illustrated referring to Figs. 6A and 6B, both the image having the largest image number and the image having the smallest image number out of the plurality of display-target images are displayed preferentially. However, when displaying the next display screen by changing the display-target images, displaying the image having the largest image number preferentially even without displaying the image having the smallest image number, enables the user to determine whether the desired image is included in the display-target images.

For example, as illustrated in Figs. 5A, 5B, 6A, and 6B, suppose a case where the user is retrieving an image of a "mountain scenery" scene. Also suppose that, in the previous display screen, the image having the largest image number is of a "car race" scene.

If the image displayed first is of a "car race" scene when the next display screen is displayed, the user can determine that "car race" scenes continue from the previous display screen (the screen before changing the display screen) . In other words, the user can determine that the desired image 509 of a "mountain scenery" scene is not included in the current display-target images. Therefore, the user can further determine that the user should input the instruction for displaying the next display screen.

On the other hand, suppose that a case where the image having the largest image number is of a "car race" scene, and that the image displayed first is of a "mountain scenery" scene when the next display screen is displayed.

In this case, the user can determine that an image of a "car race" scene displayed on the previous display screen has changed to an image of a "mountain scenery" scene in the current display screen. In other words, since an image of a "mountain scenery" scene is included in the current display-target images, the user can determine that the user should wait until all of the plurality of display-target images is displayed.

Thus, when displaying the next display screen, displaying the image having the largest image number first even without displaying the image having the smallest image number preferentially, enables the user to determine whether the desired image is included in the display-target images.

Therefore, when displaying the next display screen, the CPU 102 does not need to display the image having the smallest image number preferentially as in the case of the display order list illustrated in Fig. 4. For example, the CPU 102 may display images in descending order, i.e., the image having the largest image number first and the image having the smallest number last.

The CPU 102 preferably displays the image having the smallest image number preferentially even without displaying the image having the largest image number out of the display-target images.

When displaying the next display screen by changing the display-target images, displaying the image having a larger image number preferentially out of two display-target images enables the user to determine whether the scene of the image having a smaller image number continues from the scene of the previous display screen.

When displaying the next display screen, the display method is effective, also when there are two display-target images, since the user can determines the scene of the image that has not yet been displayed out of the two display-target images.

In the present exemplary embodiment, since 36 images are stored in the memory card 109 and nine display-target images are displayed, nine display-target images are constantly displayed even if the user repetitively changes the display-target images. However, depending on the number of images stored in the memory card 109, the number of display-target images in the file list (see Fig. 2) for the last display screen may be less than nine.

In this case, the CPU 102 may add some of first images in the file list to the display-target images in the last display screen, or display only fractional display-target images in the last display screen.

When displaying only fractional display-target images, combinations of nine display-target images remain the same as those in the previous image changeover even if the display-target images are changed from the top of the file list.

In this case, therefore, the user can easily identify the desired image.

Further, when displaying only fractional display-target images, the CPU 102 may display the image having the largest image number preferentially, or display these images in order of the image numbers specified in the file list illustrated in Fig. 2.

When the user inputs the instruction for displaying the next display screen while the last display-target images in the file list illustrated in Fig. 2 are being displayed, the CPU 102 may selects the first n display-target images (image numbers 1 to n) in the file list illustrated in Fig. 2 as display-target images.

Although, in the example illustrated in Fig. 3, in step S305, the CPU 102 displays one display-target image and, in step S306, then checks whether the user inputs the instruction for displaying the next display screen, the timing at which the CPU 102 determines whether the user inputs an instruction. However, it is not limited thereto. The CPU 102 may determine the user instruction at any timing.

For example, even in an intermediate step of displaying one display-target image, the CPU 102 may accept a request from the user, interrupt the processing for displaying the one display-target image, and display the next display screen.

Therefore, the CPU 102 can quickly display the next display screen in response to a user instruction. Likewise, in step S312, the CPU 102 may accept at any timing a user instruction for ending the processing for displaying n display-target images.

In the above descriptions, the display-target images are changed according to the order of images illustrated in the file list (see Fig. 2), i.e., in ascending order of the image number, specifically, the image having the smallest image number first and the image having the largest image number last. In other words, the CPU 102 displays the image having the largest image number preferentially out of the display-target images.

A case where a plurality of display-target images are changed in ascending order of the file list and also in descending order of the file list. The processing for determining the order of displaying images according to the order of changing images when the display-target images are changed in ascending or descending order will be described below.

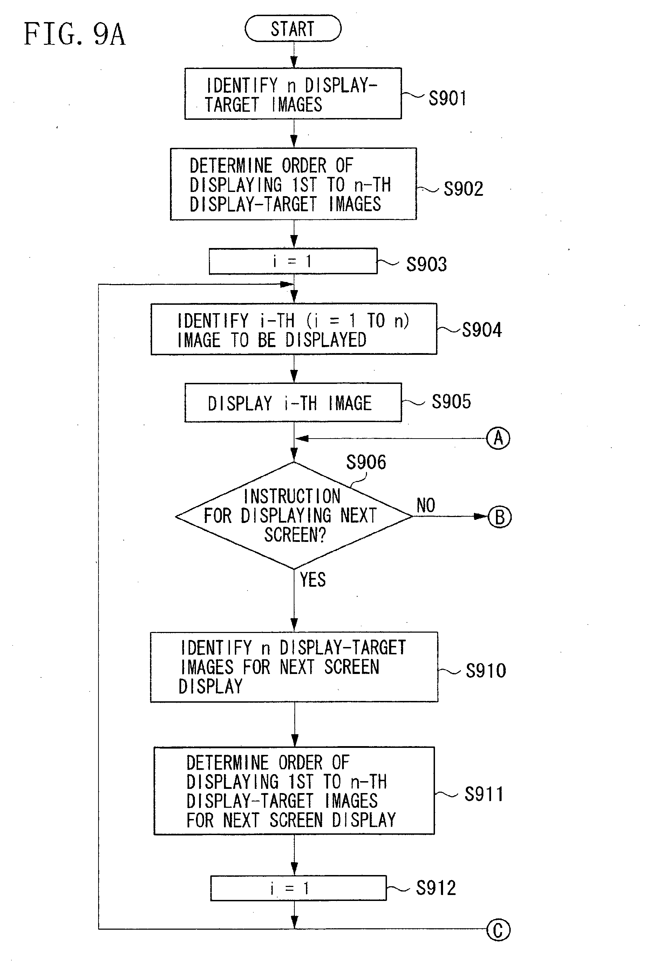

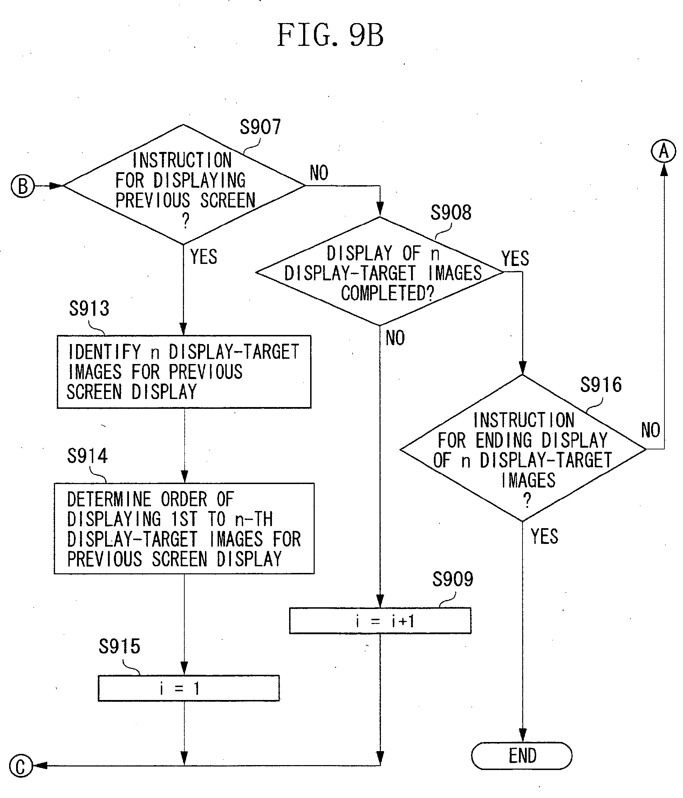

Fig. 9 (9A + 9B) illustrates the processing by the control apparatus 101 to display a plurality of images. For processing similar to that already described, duplicated descriptions will be omitted.

In steps S901 to S905, the CPU 102 executes similar processing to steps S301 to S305 illustrated in Fig. 3, respectively.

In step S906, similar to step S306 (see Fig. 3), the CPU 102 determines whether the user inputs an instruction for displaying the next display screen. When the user inputs the instruction for displaying the next display screen (YES in step S906), the processing proceeds to steps S910 to S912. Otherwise (NO in step S906), the processing proceeds to step S907.

In steps S910 to S912, similar to steps S309 to S311 (see Fig. 3), the CPU 102 determines n display-target images to be displayed in the next display screen, and the order of displaying the n display-target images.

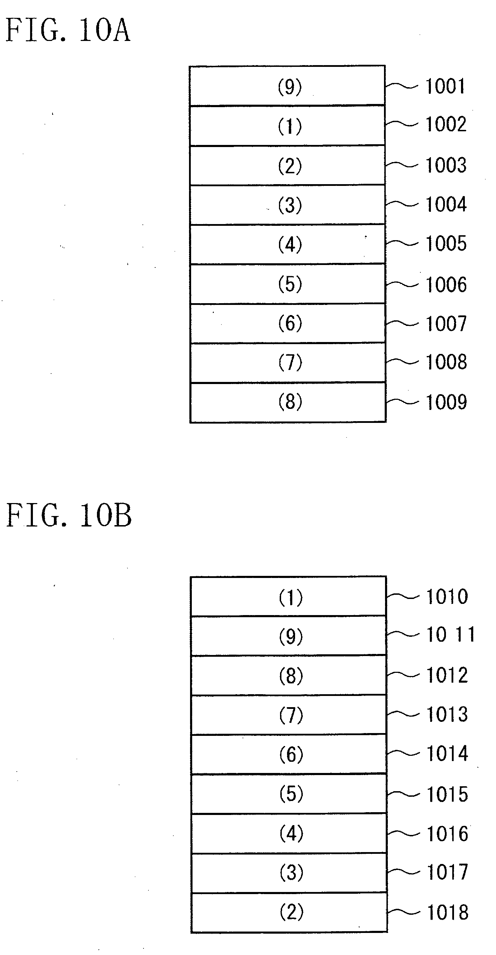

Figs. 10A and 10B illustrate the contents of the information stored in the display order storage unit 112. In step S911, the CPU 102 determines the order of displaying the n display-target images according to the display order list illustrated in Fig. 10A.

The display order list illustrated in Fig. 10A is used to display the next display screen, which is the same as the display order list illustrated in Fig. 4. Therefore, in step S911, the CPU 102 displays first the image having the largest image number out of the n display-target images.

In step S907, the CPU 102 determines whether the user inputs an instruction for displaying the previous display screen. In the present exemplary embodiment, when displaying the previous display screen, the CPU 102 displays n display-target images having smaller image numbers than the image numbers of the current n display-target images.

When the user does not input the instruction for displaying the previous display screen (NO in step S907), the processing proceeds to steps S908, S909 and S916 in which the CPU 102 performs similar processing to the processing performed in steps S307, S308, and S312. When the user inputs the instruction for displaying the previous display screen (YES in step S907), the processing proceeds to step S913.

In step S913, the CPU 102 identifies n display-target images to be displayed in the previous display screen. In this case, in the file list illustrated in Fig. 2, the CPU 102 sets as display-target images to be displayed in the previous display screen the images having image numbers smaller than image numbers of the current display-target images by n.

In step S914, similar to step S911, the CPU 102 determines the order displaying the n display-target images referring to the display order list illustrated in Fig. 10B.

In the list illustrated in Fig. 10B, a position 1010 corresponds to the display area (1). Therefore, unlike the case where the display-target images are changed in ascending order, the CPU 102 displays first in the display area (1) in the display screen the image having the smallest image number out of the n display-target images.

Therefore, when the display screen is changed to the previous display screen and the display-target images having smaller image numbers are displayed in the display screen, the CPU 102 displays first in the display area (1) the image having the smallest image number out of a plurality of display-target images.

After the display order is determined in step S914, in step S905, the CPU 102 displays on the display screen the n display-target images identified in step S913 according to the display order determined in step S914.

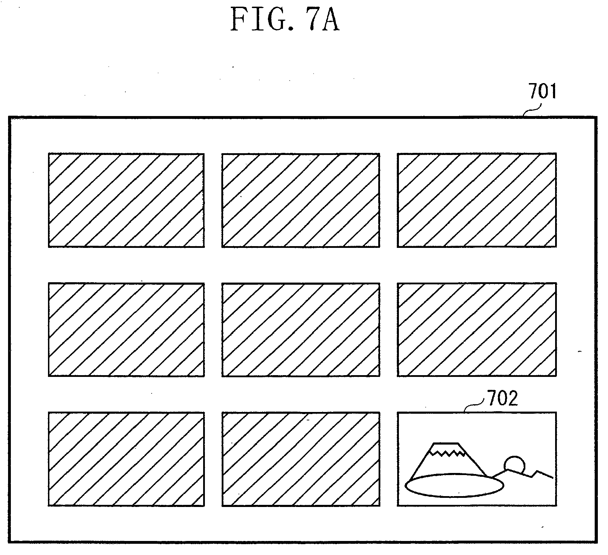

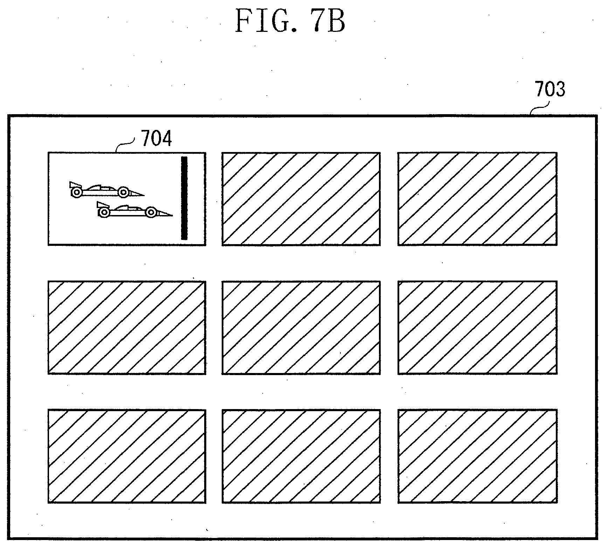

Figs. 7A and 7B illustrate states of the display screen when the display-target images are changed in ascending or descending order. Fig. 7A illustrates a case where the display-target images are changed in ascending order, i.e., the display screen when the user inputs the instruction for displaying the next display screen to change the display-target images to newer images.

In a display state 701, the CPU 102 displays first in the display area (9) illustrated in Fig. 8 a latest image 702 out of the display-target images according to the display order determined in step S911. As illustrated in Fig. 2, the image 702 corresponds to a "mountain scenery" scene.

When an image of a "car race" scene is displayed in the previous display screen (the screen before changing the display-target images), the user can determine that the scene has changed from the previous display screen.

When an image of a "mountain scenery" scene is displayed in the previous display screen (the screen before changing the display-target images), the user can determine that "mountain scenery" scenes continue from the previous display screen.

Therefore, even if images other than the image 702 out of the display-target images are not displayed, the user can determine whether the desired image is included in the display-target images.

Fig. 7B illustrates a case where the display-target images are changed in descending order, i.e., the display screen when the user inputs the instruction for displaying the previous display screen.

In a display state 703, the CPU 102 displays an image 704 first in the display area (1) illustrated in Fig. 8 according to the display order determined in step S914. The image 704 is of a "car race" scene as illustrated in Fig. 2.

When an image of a "car race" scene is displayed in the previous display screen (the screen before changing the display-target images), the user can determine that "car race" scenes continue from the previous display screen.

When an image of a "mountain scenery" scene is displayed in the previous display screen (the screen before changing the display-target images), the user can determine that the scene has changed from the previous display screen.

Therefore, even if images other than image 704 out of the display-target images are not displayed, the user can determine whether the desired image is included in the display-target images.

Thus, when changing the display-target images, the CPU 102 changes the order of displaying the images according to whether the display-target images are changed in ascending or descending order in the file list. For example, when changing the display-target images in ascending order to newer display-target images, the CPU 102 displays newer images out of the display-target images preferentially.

When changing the display-target images in descending order to older display-target images, the CPU 102 displays older images preferentially. Thus, regardless of whether the display-target images are changed in ascending or descending order, the user can determine whether the display screen of the changed display-target images includes a scene change from the previous display screen (the screen displayed before the screen is changed).

Referring to the list illustrated in Fig. 10B, although the CPU 102 displays an image in the display area (1) first and in the display area (9) secondly, the display order is not limited thereto. For example, the CPU 102 may display images in order of arrangement of the display areas, i.e., the display areas (1) to (9) in this order.

Another processing in step S305 in the flowchart illustrated in Fig. 3 and in step S905 in the flowchart illustrated in Fig. 9 will be described below. In the processing, before images are displayed, the CPU 102 displays attribute information of respective images in the display areas (1) to (9) in the display screen. Then, after displaying attribute information for respective images, the CPU 102 replaces attribute information by respective display-target images. In the present exemplary embodiment, date information for the display-target images is displayed as the attribute information for the images.

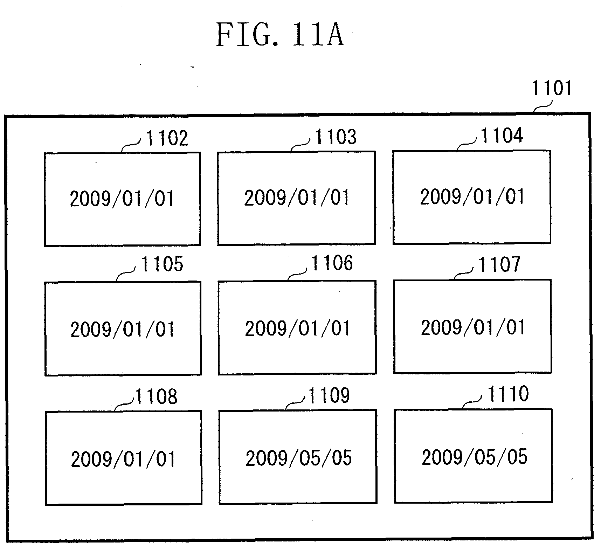

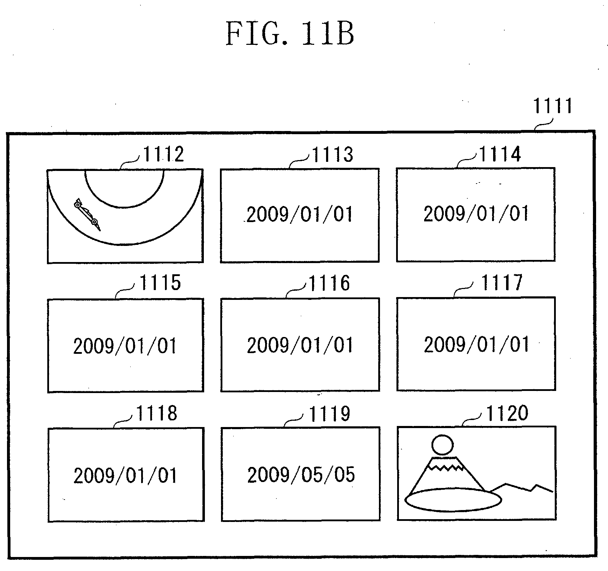

Figs. 11A and 11B illustrate example display screens in which the attribute information of the images is displayed. Fig. 11A illustrates an example display screen in which the date information for each of the plurality of display-target images is displayed.

Fig. 11B illustrates an example display screen transition from the state illustrated in Fig. 11A in which images are displayed in the display areas (1) and (9). The CPU 102 displays images according to the display order specified in the display order list illustrated in Fig. 4. More specifically, an image is displayed in the display area (9) (see

Fig. 8) first, and in the display area (1) secondly.

Displaying the attribute information before displaying respective display-target images in this way enables the user to predict the contents of the display-target images even if images are not displayed.

For example, suppose a case where the desired image of the user is an image captured in August, 2009. The user, upon looking at a display screen 1101 illustrated in Fig. 11A, grasps that the desired image is not included in the display-target images even if the images are not displayed, and inputs an instruction for changing the display-target images.

Processing for displaying texts as illustrated in Fig. 11A often is completed in a shorter time than processing for displaying picture images. Therefore, displaying images 1102 to 1110 as illustrated in Fig. 11A takes a shorter time than displaying picture images.

Presenting the user with the attribute information of images before displaying picture images in this way enables the user to determine whether the user should wait until images are displayed or display the next display screen.

The attribute information for each display-target image may be displayed in ascending order of the display areas (1) to (9) illustrated in Fig. 8, or according to the display order lists illustrated in Figs. 4, 10A, and 10B. A plurality of attribute information may be displayed sequentially or at the same time.

Image display may be started upon completion of attribute information display for all images as illustrated in Fig. 11A. Alternatively, when the user inputs an instruction after attribute information display, image display may be started in response to an input of the instruction.

According to the above-described exemplary embodiment, when displaying a plurality of images, the display control apparatus displays later images in the above-described order preferentially, instead of sequentially displaying images according the display order specified in the attribute of the images.

Thus, the user can determine whether the scene has changed in a plurality of display-target images even without waiting until all of the plurality of display-target images are displayed. Accordingly, the user can quickly determine whether the desired image is included in the display-target images. Therefore, even before all of the plurality of display-target images have been displayed, the user can determine whether the user should change the display-target images.

Further, even before all of the plurality of display-target images have been displayed, the user can select a processing-target image. Therefore, when the user determines that the desired image is included in the display-target images, the user can select the desired image even without waiting until all of the display-target images are displayed.

In the above-described exemplary embodiment, the number of display areas in the display screen is predetermined

(9 in the descriptions above), and the order of displaying images in the display areas is preset as illustrated in Fig. 4.

Therefore, if a predetermined number of display-target images are collectively identified according to the file list illustrated in Fig. 2, the CPU 102 can determine the display order for each of the predetermined number of images. Therefore, it is possible to identify suitable images and suitable display order even without identifying display images and display order for each individual display area.

Although, in the above-described exemplary embodiment, the display order of images was predetermined by the image attribute such as the time information and scene as illustrated in the file list in Fig. 2, the processing is not limited thereto. The user may specify the display order for each image, and determine the arrangement and display order of images in the display screen according to the specified order.

Although, in the above-described exemplary embodiment, images are displayed in a plurality of display areas set in the display screen, the present invention enables identifying the order of displaying images regardless of the display areas in the display screen.

For example, even when the display areas for displaying images in the display screen are changed each time the screen changeover is made, the user can determine the order of displaying a plurality of images. This also applies to a case where the display-target images are automatically displayed sequentially, which is called slide show.

Although, in the above-described exemplary embodiment, the order of displaying images is determined according to the display order lists illustrated in Figs. 4, 10A, and 10B, the display order is not limited thereto.

When displaying nine images as in the above-described exemplary embodiment, for example, the ninth to first images in the file list may be displayed in this order. Also, the fifth image may be displayed first in the display area at the center of the display screen, and then the ninth to first images may be displayed in this order.

A plurality of such display order lists indicating a plurality of display orders may be stored in the display order storage unit 112, and the user may select a desired display order by using the control unit 105. In this case, display order options selected by the user may include the display order according to the file list.

Although, in the above-described exemplary embodiment, when the user changes the display-target images, the next or previous display screen is displayed according the display order of the file list, the present invention is not limited thereto. In response to a user instruction, it is also possible to skip images for a plurality of screens in the order of the file list and identify new display-target images.

When images stored in the memory card 109 are classified into groups according to the attribute of image, the user may change the display-target images for each group.

Although, in the descriptions, a plurality of images is displayed according to the time information corresponding to the image, the present invention is not limited thereto and also applicable to a case of displaying images sorted according to various orders.

For example, the present invention is applicable to a case where a plurality of images is classified and sorted based on the scene. Further, when an image is captured by using a digital camera provided with the GPS function, it is known that information about a place where the image was captured is stored as Exif information in an image file. In this case, images may be sorted based on this information.

Further, a file list may be generated according to various attributes of image files, such as the image file size, the used camera model, the image file format type, and so on.

When a condition for sorting images is changed, a file list as illustrated in Fig. 2 is generated again based on condition settings after change.

The present invention is also applicable not only to a case of displaying images based on image files but also to a case of sorting various types of files and displaying the contents of each file.

Although, in the above-described exemplary embodiment, a printer including the print unit 107 is used, the present invention is not limited thereto and also applicable to various types of display control apparatuses capable of displaying images on a display screen, such as PCs, cameras, personal digital assistants such as mobile phones.

The present invention is also applicable not only to a case of displaying images on the display screen of the display unit 106 included in the display control apparatus 101 but also to a case of displaying images on a display screen of an external display device connected to the display control apparatus 101.

The present invention is also applicable not only to a case where the user operates the control unit 105 included in the display control apparatus 101 but also to a case where the user operates external operation devices such as a mouse and keyboard to input instructions from these operation devices.

The present invention is also achieved when the following processing is performed. Specifically, software (program) for implementing the functions of the above-described exemplary embodiment is supplied to a system or apparatus via a network or various storage media, and a computer (or a CPU or microprocessor unit (MPU)) of the system or apparatus loads and executes the program.

The present invention is also applicable not only to a case where one processor executes processing but also to a case where a plurality of processors execute processing in collaboration with each other.

## Claims

1. A display control apparatus (101) comprising:
display control means (102) configured to cause a display apparatus (106) to sequentially display each of a predetermined number of display-target images out of a plurality of image candidates to be displayed on a display screen of the display apparatus (106) so that the display-target images are arranged in the display screen in order of arrangement according to a predetermined arranging order of the predetermined number of display-target images;
changing means (102) configured, in response to a user instruction for displaying a next display screen (S906) or a previous display screen (S907), to change the predetermined number of display-target images by the display control means (102) out of the plurality of image candidates in units of the predetermined number according to the predetermined order; and
determination means (102) configured, when the predetermined number of images are set as new display-target images according to the predetermined order by the changing means, to determine a sequential display order based on the user instruction of sequentially displaying the predetermined number of images by the displaying control means (102);
wherein the display control means is configured to cause the display apparatus (106) to display each of the predetermined number of images in the order of arrangement according to the predetermined arranging order by sequentially arranging the predetermined number of images according to the sequential display order determined by the determination means (102).

2. The display control apparatus according to claim 1, wherein the display control means is configured to cause the display apparatus (106) to display each of the predetermined number of images in each of the predetermined number of display areas in the display screen, and the determination means is configured to collectively determine a sequential display order for the predetermined number of images according to a predetermined display order corresponding to each of the predetermined number of display areas.

3. The display control apparatus according to any one of claims 1 and 2, wherein the determination means is configured to determine the sequential display order based on an attribute of each of the plurality of images.

4. The display control apparatus according to any one of claims 1 to 3, wherein, in a case where a user instruction for the changing by the changing means is input before all of the predetermined number of display-target images have been displayed, the changing means is configured to change the predetermined display-target images and the display control means is configured to cause the display apparatus to display on the display screen the predetermined number of images set as new display-target images by the changing means.

5. The display control apparatus according to any one of claims 1 to 4, wherein, before displaying the predetermined number of images, the display control means is configured to cause the display apparatus to display information about an attribute of each of the predetermined number of images on the display screen.

6. The display control apparatus according to any one of claims 1 to 5, wherein the determination means is configured to determine the sequential display order of displaying the predetermined number of images so that two non-sequential images in the predetermined arranging order of the predetermined number of images are displayed earlier than images between the two images in the predetermined arranging order.

7. The display control apparatus according to any one of claims 1 to 6, wherein the determination means is configured to determine the sequential display order of sequentially displaying the predetermined number of images so that the last image in the predetermined arranging order of the predetermined number of images is displayed first.

8. A display control method comprising:
causing a display apparatus (106) to sequentially display each of a predetermined number of display-target images out of a plurality of image candidates to be displayed on a display screen of the display apparatus (106) so that the display-target images are arranged in the display screen in order of arrangement according to a predetermined arranging order of the predetermined number of display-target images;
changing, in response to a user instruction for displaying a next display screen (S906) or a previous display screen (S907), the predetermined number of display-target images out of the plurality of image candidates in units of the predetermined number according to the predetermined arranging order;
determining, when the predetermined number of images are set as new display-target images according to the predetermined arranging order by the changing, a sequential display order based on the user instruction of sequentially displaying the predetermined number of images; and
causing the display apparatus (106) to display each of the predetermined number of images in the order of arrangement according to the predetermined arranging order by sequentially arranging the predetermined number of images according to the sequential display order determined by the determining.

9. A computer executable program for causing a computer to execute the display control method according to claim 8.

## Patentansprüche

1. Anzeigesteuerungsvorrichtung (101) umfassend:
eine Anzeigesteuerungseinrichtung (102), die konfiguriert ist zu veranlassen, dass eine Anzeigevorrichtung (106) jedes Anzeigezielbild einer vorbestimmten Anzahl Anzeigezielbilder aus mehreren auf einem Anzeigebildschirm der Anzeigevorrichtung (106) anzuzeigenden Bildkandidaten aufeinanderfolgend anzeigt, so dass die Anzeigezielbilder im Anzeigebildschirm in Anordnungsreihenfolge gemäß einer vorbestimmten Anordnungsreihenfolge der vorbestimmten Anzahl Anzeigezielbilder angeordnet werden;
eine Änderungseinrichtung (102), die konfiguriert ist, ansprechend auf einen Benutzerbefehl zum Anzeigen eines nächsten Anzeigebildschirms (S906) oder eines vorherigen Anzeigebildschirms (S907), die vorbestimmte Anzahl Anzeigezielbilder durch die Anzeigesteuerungseinrichtung (102) aus mehreren Bildkandidaten in Einheiten der vorbestimmten Anzahl gemäß der vorbestimmten Reihenfolge zu ändern; sowie
eine Bestimmungseinrichtung (102), die konfiguriert ist, eine aufeinanderfolgende Anzeigereihenfolge basierend auf dem Benutzerbefehl zum aufeinanderfolgenden Anzeigen der vorbestimmten Anzahl Bilder durch die Anzeigesteuerungseinrichtung (102) zu bestimmen, wenn durch die Änderungseinrichtung die vorbestimmte Anzahl Bilder als neue Anzeigezielbilder gemäß der vorbestimmten Anordnungsreihenfolge eingestellt ist;
wobei die Anzeigesteuerungseinrichtung konfiguriert ist, zu veranlassen, dass die Anzeigevorrichtung (106) jedes Bild der vorbestimmten Anzahl Bilder in der Anordnungsreihenfolge gemäß der vorbestimmten Anordnungsreihenfolge anzeigt durch aufeinanderfolgendes Anordnen der vorbestimmten Anzahl Bilder gemäß der durch die Bestimmungseinrichtung (102) bestimmten aufeinanderfolgenden Anzeigereihenfolge.

2. Anzeigesteuerungsvorrichtung nach Anspruch 1, wobei die Anzeigesteuerungseinrichtung konfiguriert ist, zu veranlassen, dass die Anzeigevorrichtung (106) jedes Bild der vorbestimmten Anzahl Bilder in jedem Anzeigegebiet der vorbestimmten Anzahl Anzeigegebiete im Anzeigebildschirm anzeigt, und die Bestimmungseinrichtung konfiguriert ist, eine aufeinanderfolgende Anzeigereihenfolge für die vorbestimmte Anzahl Bilder gemäß einer vorbestimmten Anzeigereihenfolge entsprechend zu jedem Anzeigegebiet der vorbestimmten Anzahl Anzeigegebiete gemeinsam zu bestimmen.

3. Anzeigesteuerungsvorrichtung nach einem der Ansprüche 1 und 2, wobei die Bestimmungseinrichtung konfiguriert ist, die aufeinanderfolgende Anzeigereihenfolge basierend auf einem Attribut von jedem der mehreren Bilder zu bestimmen.

4. Anzeigesteuerungsvorrichtung nach einem der Ansprüche 1 bis 3, wobei falls ein Benutzerbefehl zum Ändern durch die Änderungseinrichtung eingegeben wird, bevor alle Anzeigezielbilder der vorbestimmten Anzahl Anzeigezielbilder angezeigt worden sind, die Änderungseinrichtung konfiguriert ist, die vorbestimmten Anzeigezielbilder zu ändern, und die Anzeigesteuerungseinrichtung konfiguriert ist, zu veranlassen, dass die Anzeigevorrichtung auf dem Anzeigebildschirm die durch die Änderungseinrichtung als neue Anzeigezielbilder eingestellten vorbestimmte Anzahl Bilder anzeigt.

5. Anzeigesteuerungsvorrichtung nach einem der Ansprüche 1 bis 4, wobei die Anzeigesteuerungseinrichtung konfiguriert ist, vor Anzeigen der vorbestimmten Anzahl Bilder zu veranlassen, dass die Anzeigevorrichtung Information über ein Attribut von jedem Bild der vorbestimmten Anzahl Bilder auf dem Anzeigebildschirm anzeigt.

6. Anzeigesteuerungsvorrichtung nach einem der Ansprüche 1 bis 5, wobei die Bestimmungseinrichtung konfiguriert ist, die aufeinanderfolgende Anzeigereihenfolge vom Anzeigen der vorbestimmten Anzahl Bilder so zu bestimmen, dass zwei nicht aufeinanderfolgende Bilder in der vorbestimmten Anordnungsreihenfolge der vorbestimmten Anzahl Bilder früher angezeigt werden als Bilder zwischen den zwei Bildern in der vorbestimmten Anordnungsreihenfolge.

7. Anzeigesteuerungsvorrichtung nach einem der Ansprüche 1 bis 6, wobei die Bestimmungseinrichtung konfiguriert ist, die aufeinanderfolgende Anzeigereihenfolge vom aufeinanderfolgenden Anzeigen der vorbestimmten Anzahl Bilder so zu bestimmen, dass das letzte Bild in der vorbestimmten Anordnungsreihenfolge der vorbestimmten Anzahl Bilder zuerst angezeigt wird.

8. Anzeigesteuerungsverfahren umfassend:
Veranlassen, dass eine Anzeigevorrichtung (106) jedes Anzeigezielbild einer vorbestimmten Anzahl Anzeigezielbilder aus mehreren auf einem Anzeigebildschirm der Anzeigevorrichtung (106) anzuzeigenden Bildkandidaten so aufeinanderfolgend anzeigt, dass die Anzeigezielbilder im Anzeigebildschirm in Anordnungsreihenfolge gemäß einer vorbestimmten Anordnungsreihenfolge der vorbestimmten Anzahl Anzeigezielbilder angeordnet werden;
Ändern der vorbestimmten Anzahl Anzeigezielbilder aus mehreren Bildkandidaten in Einheiten der vorbestimmten Anzahl gemäß der vorbestimmten Anordnungsreihenfolge, ansprechend auf einen Benutzerbefehl zum Anzeigen eines nächsten Anzeigebildschirms (S906) oder eines vorherigen Anzeigebildschirms (S907);
Bestimmen einer aufeinanderfolgenden Anzeigereihenfolge basierend auf dem Benutzerbefehl zum aufeinanderfolgenden Anzeigen der vorbestimmten Anzahl Bilder, wenn durch das Ändern die vorbestimmte Anzahl Bilder als neue Anzeigezielbilder gemäß der vorbestimmten Anordnungsreihenfolge eingestellt ist; sowie
Veranlassen, dass die Anzeigevorrichtung (106) jedes Bild der vorbestimmten Anzahl Bilder in ihrer Abfolge gemäß der vorbestimmten Anordnungsreihenfolge anzeigt durch aufeinanderfolgendes Anordnen der vorbestimmten Anzahl Bilder gemäß der durch das Bestimmen bestimmten aufeinanderfolgenden Anzeigereihenfolge.

9. Computerausführbares Programm zum Veranlassen, dass ein Computer das Anzeigesteuerungsverfahren nach Anspruch 8 ausführt.

## Revendications

1. Dispositif (101) de commande d'affichage comprenant :
un moyen (102) de commande d'affichage constitué pour faire qu'un dispositif (106) d'affichage affiche séquentiellement chacune d'un nombre prédéterminé d'images cibles d'affichage parmi une pluralité d'images candidates pour être affichées sur un écran d'affichage du dispositif (106) d'affichage de sorte que les images cibles d'affichage sont agencées sur l'écran d'affichage dans un ordre d'agencement selon un ordre d'agencement prédéterminé du nombre prédéterminé d'images cibles d'affichage ;
un moyen (102) de changement constitué pour, en réponse à une instruction d'utilisateur d'afficher un écran d'affichage suivant (S906) ou un écran d'affichage précédent (S907), changer, à l'aide du moyen (102) de commande d'affichage, le nombre prédéterminé d'images cibles d'affichage provenant de la pluralité d'images candidates en unités du nombre prédéterminé selon l'ordre prédéterminé ; et
un moyen (102) de détermination constitué pour, lorsque le nombre prédéterminé d'images est fixé par le moyen d'affichage en tant que nouvelles images cibles d'affichage selon l'ordre prédéterminé, déterminer un ordre d'affichage séquentiel basé sur l'instruction d'utilisateur d'afficher séquentiellement le nombre prédéterminé d'images à l'aide du moyen (102) de commande d'affichage,
dans lequel le moyen de commande d'affichage est constitué pour faire que le dispositif (106) d'affichage affiche chacune du nombre prédéterminé d'images dans l'ordre d'agencement selon l'ordre d'agencement prédéterminé en agençant séquentiellement le nombre prédéterminé d'images selon l'ordre d'affichage séquentiel déterminé par le moyen (102) de détermination.

2. Dispositif de commande d'affichage selon la revendication 1, dans lequel le moyen de commande d'affichage est constitué pour faire que le dispositif (106) d'affichage affiche chacune du nombre prédéterminé d'images dans chacune du nombre prédéterminé de zones d'affichage sur l'écran d'affichage, et dans lequel le moyen de détermination est constitué pour déterminer collectivement un ordre d'affichage séquentiel pour le nombre prédéterminé d'images selon un ordre d'affichage prédéterminé correspondant à chacune du nombre prédéterminé de zones d'affichage.

3. Dispositif de commande d'affichage selon l'une quelconque des revendications 1 et 2, dans lequel le moyen de détermination est constitué pour déterminer l'ordre d'affichage séquentiel en se basant sur un attribut de chacune de la pluralité d'image.

4. Dispositif de commande d'affichage selon l'une quelconque des revendications 1 à 3, dans lequel, dans le cas où une instruction d'utilisateur pour changer à l'aide du moyen de changement est entrée avant que la totalité du nombre prédéterminé d'images cibles d'affichage ait été affichée, le moyen de changement est constitué pour changer les images cibles d'affichage prédéterminées et le moyen de commande d'affichage est constitué pour faire que le dispositif d'affichage affiche sur l'écran d'affichage le nombre prédéterminé d'images fixées en tant que nouvelles images cibles d'affichage par le moyen de changement.

5. Dispositif de commande d'affichage selon l'une quelconque des revendications 1 à 4, dans lequel, avant l'affichage du nombre prédéterminé d'images, le moyen de commande d'affichage est constitué pour faire que le dispositif d'affichage affiche, sur l'écran d'affichage, une information d'affichage au sujet d'un attribut de chacune du nombre prédéterminé d'images.

6. Dispositif de commande d'affichage selon l'une quelconque des revendications 1 à 5, dans lequel le moyen de détermination est constitué pour déterminer l'ordre d'affichage séquentiel d'affichage du nombre prédéterminé d'images de sorte que deux images non séquentielles dans l'ordre d'agencement prédéterminé du nombre prédéterminé d'images sont affichées plus précocement que des images entre les deux images dans l'ordre d'agencement prédéterminé.

7. Dispositif de commande d'affichage selon l'une quelconque des revendications 1 à 6, dans lequel le moyen de détermination est constitué pour déterminer l'ordre d'affichage séquentiel d'affichage séquentiellement du nombre prédéterminé d'images de sorte que la dernière image dans l'ordre d'agencement prédéterminé du nombre prédéterminé d'images est affichée en premier.

8. Procédé de commande d'affichage comprenant :
le fait de faire qu'un dispositif (106) d'affichage affiche séquentiellement chacune d'un nombre prédéterminé d'images cibles d'affichage parmi une pluralité d'images candidates pour être affichées sur un écran d'affichage du dispositif (106) d'affichage de sorte que les images cibles d'affichage sont agencées sur l'écran d'affichage dans un ordre d'agencement selon un ordre d'agencement prédéterminé du nombre prédéterminé d'images cibles d'affichage ;
le changement, en réponse à une instruction d'utilisateur d'afficher un écran d'affichage suivant (S906) ou un écran d'affichage précédent (S907), du nombre prédéterminé d'images cibles d'affichage provenant de la pluralité d'images candidates en unités du nombre prédéterminé selon l'ordre d'agencement prédéterminé ;
la détermination, lorsque le nombre prédéterminé d'images est fixé, par le changement en tant que nouvelles images cibles d'affichage selon l'ordre d'agencement prédéterminé, d'un ordre d'affichage séquentiel basé sur l'instruction d'utilisateur d'afficher séquentiellement le nombre prédéterminé d'images ; et
le fait de faire que le dispositif (106) d'affichage affiche chacune du nombre prédéterminé d'images dans l'ordre d'agencement selon l'ordre d'agencement prédéterminé en agençant séquentiellement le nombre prédéterminé d'images selon l'ordre d'affichage séquentiel déterminé par la détermination.

9. Programme exécutable informatiquement pour faire qu'un processeur mette en oeuvre le procédé de commande d'affichage selon la revendication 8.
